# EUROPEAN PATENT APPLICATION

(11) **EP 4 837 859 A1**
(43) Date of publication of application: **11.11.2026**
(21) Application number: 24884503.4
(22) Date of filing: 22.10.2024
(51) Int. Cl.: B65F 3/00, B65G 67/06, B65G 69/18

(54) **HOUSEHOLD WASTE LOADING METHOD AND LOADING SYSTEM**

(30) Priority: 02.11.2023 CN 202311450977
(71) Applicant: CHONGQING MINHEHUAN ECOLOGICAL ENVIRONMENTAL PROTECTION TECHNOLOGY CO., LTD, Chongqing 401336 (CN)
(72) Inventor: CHEN, Zhilin, Chongqing 401336 (CN)
(74) Representative: Schmitt-Nilson Schraud Waibel Wohlfrom Patentanwälte Partnerschaft mbB
(86) International application number: PCT/CN2024/126288
(87) International publication number: WO 2025/092499

(57) **Abstract**

A household waste loading method and a loading system for implementing the household waste loading method. The loading system comprises a waste loading hopper for guiding waste into a cargo body of a waste transport vehicle, a telescopic sealing structure arranged outside the waste loading hopper for forming a rectangular annular seal between a cargo box opening and an outlet of the waste loading hopper, a suspension frame fixedly arranged outside the telescopic sealing structure, two sealing plates arranged on the suspension frame for sealing a lower port of the telescopic sealing structure, a driving device for driving the two sealing plates to perform opening and closing movements, and a cover picking and placing device for picking and placing a cargo box cover of the waste transport vehicle. The household waste loading method and the loading system enable a front-end household waste collection vehicle to load waste into the cargo box of the waste transport vehicle in a rectangular annular airtight passage, thereby ensuring that the waste does not touch the ground throughout the process and reducing the generation of foul odors and sewage.

## Description

### TECHNICAL FIELD

The present invention relates to the technical field of household waste transportation, and in particular, to a loading device for household waste.

### BACKGROUND

At present, after household waste enters a transfer station through various collection methods (household waste collection and transportation at this stage is often referred to as front-end household waste collection), the household waste should be compressed, and then the compressed household waste is transported to a treatment site.

The main purpose of compressing household waste is to discharge water in the household waste. If sewage in the household waste is not squeezed out, the sewage in the household waste may penetrate into soil and groundwater after landfill, thereby causing soil and groundwater pollution, and then seriously harming the ecological environment. Although with the advancement of science and technology, at present, household waste incineration for power generation has gradually replaced landfill as the main treatment method of household waste, a conventional method of compressing household waste before transporting the household waste to a large household waste dump has not changed.

There are three technical solutions for an existing household waste transfer station: horizontal compression loading (referred to as horizontal loading), overturning vertical loading (referred to as vertical loading), and vehicle-to-vehicle docking compression loading. These three technical solutions all have technical problems.

For the first solution, that is, the horizontal compression loading, a waste storage tank is arranged at a transfer station, a pressure plate is arranged in the waste storage tank, the waste collected by a front-end household waste collection vehicle is dumped in the waste storage tank, and then the waste is squeezed by the pressure plate and loaded into the cargo body. After loading, the cargo body is horizontally placed on a chassis of a transport vehicle by lifting and dragging the cargo body, and then is transported. The technical problems are as follows.
1) A pressure plate mechanism is easily damaged. The composition of household waste is complex, and there may be stones, tiles and even steel bars in household waste. These hard objects easily cause damage such as jamming and corrosion to movable parts of the pressure plate mechanism. At the same time, a large amount of waste is stored in the waste storage tank, and the pressure plate has to cut some waste for extrusion. The cutting process also causes the pressure plate to be easily damaged. If the pressure plate mechanism is damaged, the waste transfer production line cannot be loaded.
2) Sewage discharged by compression is waste leachate, thereby seriously polluting the environment. On the other hand, the sewage discharged by compression may seriously pollute the environment, thereby also making it difficult to choose a site for construction of a waste transfer station.
3) "Hook-arm" waste transportation supporting a compression treatment method has more "dead weight" and less payload. A hook-arm loading mechanism of a hook-arm transport vehicle is a force-resisting lever, and the "dead weight" of the hook arm should be added to the chassis. In order to adapt to this "force-resisting lever", a waste bin cooperating with the hook-arm transport vehicle has to increase strength of the body, which in turn increases the "dead weight" of the waste bin. The increased "dead weight" in many positions reduces the payload of transportation. In addition, because the loaded cargo body has to be lifted and dragged by the hook arm to be placed horizontally on the chassis of the transport vehicle and then transported, the "lifting and dragging" process may increase the safety risk. In order to control the risk, the loading weight may be limited, thereby significantly reducing the payload of transportation.
4) The waste storage tank for horizontal compression loading is very deep. In order to adapt to the action that "the pressing plate squeezes waste and loads the waste into the cargo body", the waste storage tank is very deep, generally not less than 6 meters. When the front-end household waste collection vehicle dumps waste into the waste storage tank, backflush airflow (foul odor airflow) may be generated. The backflush airflow generated by the deep waste storage tank is large, which is not convenient for foul odor collection and treatment.

For the second solution, that is, the overturning vertical loading, the cargo body is overturned from the horizontal state to the vertical state using a hook arm, a steel wire rope and a pallet, and is loaded by gravity. After loading, the cargo body is overturned from the vertical state to the horizontal state using the hook arm, the steel wire rope and the pallet, and then is placed on the chassis of the transport vehicle and transported. The technical problems are as follows.

The hook arm, the steel wire rope and the pallet supporting the overturning vertical loading method have more "dead weight" and less payload during waste transportation. In particular, the "overturning process" may increase the safety risk. In order to control the risk, the loading weight may be limited, thereby significantly reducing the payload of transportation.

2) The cargo body is very deep during overturning vertical loading. In the overturning vertical loading method, in order to load more waste, the cargo body is very long, generally not less than 7 meters. After the cargo body is overturned, it indicates that "the cargo body is very deep". When the front-end household waste collection vehicle dumps waste in the transfer station, backflush airflow (foul odor airflow) may be generated. The backflush airflow generated by the deep cargo body is large, which is not convenient for foul odor collection and treatment.

For the third solution, that is, the vehicle-to-vehicle docking compression loading, the front-end household waste collection vehicle docks with a compression-type waste transport vehicle. The front-end household waste collection vehicle dumps waste into a tipping bucket of the compression-type waste transport vehicle for multiple times. The tipping bucket is lifted and overturned to dump waste into an extrusion cavity of the compression-type waste transport vehicle. A vehicle-mounted pressing plate squeezes waste into the cargo body, and the compression-type waste transport vehicle transports the waste after loading. The technical problems are as follows.

Loading efficiency is low. The loading process of vehicle-to-vehicle docking compression loading is complex, and only a small amount of waste can be loaded in each reciprocating loading process (the loading method of overturning vertical loading is that the entire front-end household waste collection vehicle dumps waste to achieve loading). In general, the transfer volume of waste in the transfer station is relatively large. The efficiency is low, and the vehicle-to-vehicle docking compression loading method cannot be used.

Airtight loading cannot be achieved. The process of vehicle-to-vehicle docking compression loading requires "lifting and overturning the tipping bucket" and a large range of activities. Moreover, the styles and models of the front-end household waste collection vehicles are diverse. Many factors are superimposed, thereby making the method of "airtight loading" extremely expensive or even impossible. Airtight loading is impossible. Waste and sewage may leak, and foul odor may overflow, thereby causing environmental pollution. Although this loading method achieves a high loading capacity, this loading method has been widely abandoned due to environmental pollution issues.

### SUMMARY

### Technical problems

The embodiments aim to provide a loading method and a loading system for household waste, thereby solving a problem that the existing household waste needs to be compressed before loading, a technical problem that sewage and foul odor pollute the environment during loading, and a technical problem that the economic benefit of transporting household waste is poor.

### Technical solution

A loading method for household waste of the present invention includes following steps:
1) driving a waste transport vehicle to a position under a waste loading hopper of a waste transfer workshop;
2) removing a cargo body cover of a cargo body when the cargo body of the waste transport vehicle is in a horizontal state to completely open a cargo body opening of the waste transport vehicle;
3) controlling the telescopic sealing structure to extend downward to the cargo body opening of the waste transport vehicle, to form a rectangular annular seal between the cargo body opening of the waste transport vehicle and the waste loading hopper; wherein the telescopic sealing structure is arranged outside the waste loading hopper;
4) dumping waste into the waste loading hopper by a front-end household waste collection vehicle entering the transfer workshop, and falling down the household waste from the waste loading hopper into the cargo body of the waste transport vehicle;
5) controlling the telescopic sealing structure on an outer side of the waste loading hopper to retract upward and reset; and
6) covering the cargo body cover of the waste transport vehicle.

Further, the loading method for household waste further includes closing an outlet at a lower end of the telescopic sealing structure with sealing plates after step 6), or moving a cargo body of another waste transport vehicle below the outlet of the telescopic sealing structure after step 6) to form the rectangular annular seal.

Further, the loading method for household waste further includes extracting gas in the rectangular annular sealed space for deodorization.

The present invention further discloses a loading system for household waste for implementing the loading method for household waste, including the waste loading hopper for guiding waste into the cargo body of the waste transport vehicle, the telescopic sealing structure arranged outside the waste loading hopper for forming the rectangular annular seal between the cargo body opening and the outlet of the waste loading hopper, and a cover picking and placing device for picking and placing the cargo body cover of the waste transport vehicle.

Further, the loading system for household waste further includes a suspension frame fixedly arranged outside the telescopic sealing structure, the two sealing plates arranged on the suspension frame for sealing a lower port of the telescopic sealing structure, and driving devices for driving the two sealing plates to perform opening and closing movements.

Further, each of the driving devices includes a rack arranged on each of the sealing plates, a gear cooperating with the rack, and a motor arranged on the suspension frame to drive the gear to rotate.

Further, the telescopic sealing structure includes a fixed sealing sleeve arranged outside the waste loading hopper, a movable sealing sleeve in sliding fit with the fixed sealing sleeve up and down, and first linear motion drivers for driving the movable sealing sleeve to move up and down.

Further, the first linear motion drivers are vertically arranged, a lower end of each of the first linear motion drivers is fixedly arranged, and the movable sealing sleeve is provided with jacking blocks cooperating with an upper end of a corresponding one of the first linear motion drivers.

Further, the telescopic sealing structure further includes a rubber sealing skirt arranged at a lower end of the movable sealing sleeve.

Further, the suspension frame is a rectangular sealing pipe.

Further, the cover picking and placing device includes a hydraulic cylinder with a vertically downward telescopic rod, a horizontal fork plate or a movable connecting member connected with a piston rod of a hydraulic cylinder, and second linear motion drivers for driving the hydraulic cylinder to translate.

Further, the loading system for household waste further includes a parking positioning device of the waste transport vehicle.

Further, the parking positioning device includes guiding limit rails for guiding the waste transport vehicle to travel under the waste loading hopper and a parking distance positioning plate for cooperating with the ranging radar arranged in a front of the waste transport vehicle.

Further, the loading system for household waste further includes a combustion deodorizing device. The combustion deodorizing device includes a gas drainage pipe communicating with an inner space of the fixed sealing sleeve, a combustion furnace connected with the gas drainage pipe, a vertical combustion chamber connected with the combustion furnace, an exhaust pipe connected with an exhaust port of the vertical combustion chamber, an exhaust fan arranged at a tail end of the exhaust pipe, and a cooling device arranged outside the vertical combustion chamber and the exhaust pipe.

Further, the cooling device includes a cooling water tank arranged outside the vertical combustion chamber and the exhaust pipe and a cooling water pipe wrapped outside the vertical combustion chamber.

### Beneficial effects

1. According to the loading method and the loading system for household waste of the embodiments, the movable sealing sleeve of the telescopic sealing structure can move up and down to be closely attached to the cargo body opening of the waste transport vehicle, thereby forming the rectangular annular seal between the cargo body opening of the waste transport vehicle and the waste loading hopper. The front-end household waste collection vehicle loads the collected household waste from the rectangular annular airtight passage into the cargo body of the waste transport vehicle, thereby achieving efficient loading by gravity, preventing waste from touching the ground, and preventing the problem of environmental pollution caused by foul odors and sewage leakage.
2. According to the loading method and the loading system for household waste of the embodiments, the waste is loaded when the cargo body is in the horizontal state. Compared with the horizontal compression loading and the cargo body overturning vertical loading, according to the embodiments, the drop height of the waste in the loading process is relatively small, and the upward movement speed of the backflush airflow generated after the waste falls into the cargo body is relatively small. Moreover, in the embodiments, the backflush airflow is also buffered by moving in the front-rear direction of the cargo body during horizontal loading, thereby further reducing the upward backflush speed of the backflush airflow. A foul odor collection and treatment device can easily collect and treat foul odor after the speed of the backflush airflow is reduced.
   It is difficult for the horizontal compression loading method or the overturning vertical loading method to collect foul odor due to the fast rising speed of backflush airflow, such that the resulting foul odor causes serious environmental pollution, making it difficult to select a site for the construction of a waste transfer station, and then making it difficult to transport household waste in urban areas. However, because the vehicle-to-vehicle docking compression loading method cannot perform airtight loading, and there are no measures to collect and treat foul odor, the foul odor may inevitably overflow. The loading method and the loading system for household waste in the embodiments have no problem of "high velocity of backflush airflow", such that foul odor is easily collected and treated, and a waste transfer station with low foul odor or even no foul odor can be achieved. This in turn facilitates site selection for the construction of a transfer station, which is conducive to timely cleaning and transportation of household waste in urban areas.
3. According to the loading method and the loading system for household waste of the embodiments, the cargo body is loaded in the horizontal state, and the cargo body is transported in the horizontal state. There is no mechanism for changing the state of the cargo body on the vehicle. The existing loading methods all need to change the state of the cargo body. A mechanism of changing the state of the cargo body arranged on the vehicle may significantly increase the body weight, thereby reducing the payload of transportation. At the same time, changing the state of the cargo body may increase the loading safety risk. In order to control the loading safety risk, the effective loading capacity may be significantly reduced, thereby further reducing the payload of the transport vehicle. The embodiments do not need to change the state of the cargo body, thereby improving the loading safety of the waste transport vehicle, and also significantly improving the payload of the waste transport vehicle. The economic benefit is higher. A 31-ton transport vehicle according to the embodiments can legally transport 25 tons of waste. The 31-ton traction capacity in the prior art is that only 16 tons of waste can be legally transported for a horizontal type, and only 15 tons of waste can be legally transported for a vertical type.
4. According to the loading method and the loading system for household waste of the embodiments, sewage accumulated in the front-end household waste transport vehicle can naturally flow into the waste bin of the waste transport vehicle from a high position to a low position, and the accumulated sewage may not spill and flow around when dumping waste, resulting in better environmental performance during loading.
5. According to the loading method and the loading system for household waste of the embodiments, the telescopic sealing structure is quickly retracted upward after loading waste, and the lower port of the telescopic sealing structure can be quickly sealed by the sealing plates or the cargo body of another waste transport vehicle. At the same time, the cargo body cover can be quickly covered by the cover picking and placing device, such that waste is exposed to the air for a short time, thereby significantly preventing foul odor in the waste from polluting the air.
6. According to the loading method and the loading system for household waste of the embodiments, the combustion deodorizing device is adopted to combust foul odor inside the telescopic sealing structure, and the combustion deodorizing device can also suck foul odor near the inlet and the outlet of the telescopic sealing structure for combustion treatment, thereby further eliminating a problem that waste foul odor pollutes air.
7. According to the loading method and the loading system for household waste of the embodiments, the negative pressure is adopted to introduce gas at a loading position into the combustion deodorizing device, thereby completely eliminating foul odor of gas through combustion, and resulting in excellent environmental performance

### BRIEF DESCRIPTION OF THE DRAWINGS

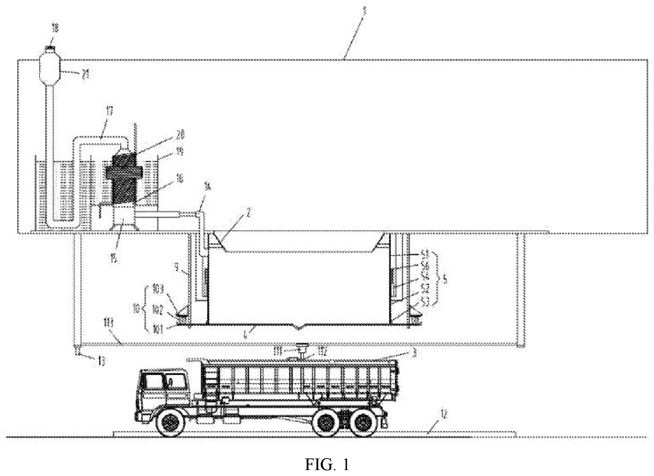

FIG. 1 is a schematic diagram of a waste transport vehicle driving under a waste loading hopper; and

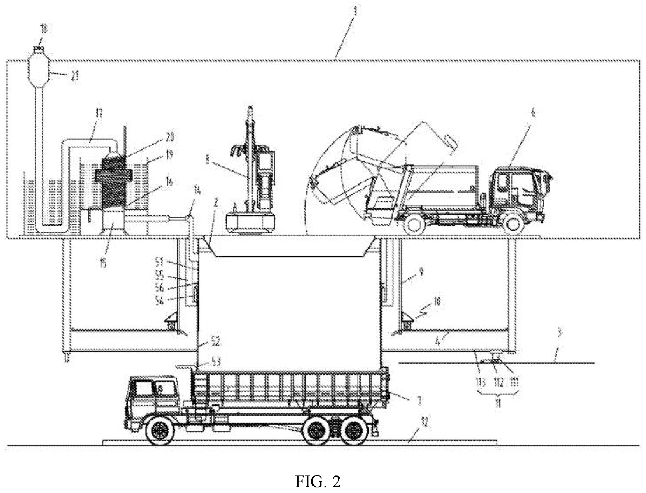

FIG. 2 is a schematic diagram of a loading state of household waste.

### DETAILED DESCRIPTION OF THE EMBODIMENTS

The present invention will be further described with reference to the drawings and embodiments.

The loading method for household waste of this embodiment includes the following steps.

In step 1), a waste transport vehicle is driven to a position under a waste loading hopper 2 of a waste transfer workshop 1.

In step 2), when a cargo body of the waste transport vehicle is in a horizontal state, a cargo body cover 3 of the waste transport vehicle is removed to completely open a cargo body opening of the waste transport vehicle;

In step 3), a telescopic sealing structure is controlled to extend downward to the cargo body opening of the waste transport vehicle to form a rectangular annular seal between the cargo body opening of the waste transport vehicle and the waste loading hopper. The telescopic sealing structure is arranged outside the waste loading hopper.

In step 4), the waste is dumped into the waste loading hopper by a front-end household waste collection vehicle 6 entering the transfer workshop, and the household waste falls down from the waste loading hopper into the cargo body of the waste transport vehicle 7.

In step 5), the waste in the cargo body is leveled in the rectangular annular sealed space. In the specific implementation, a grab crane 8 can be adopted for leveling, and of course, leveling operation may also be eliminated when the waste does not reach the cargo body opening.

In step 6), the telescopic sealing structure on an outer side of the waste loading hopper is controlled to retract upward and reset.

In step 7), the outlet of the telescopic sealing structure is closed through the sealing plates.

In step 8), the cargo body cover of the waste transport vehicle is covered.

Of course, in a process of continuous loading operation, the sealing plates for closing an outlet of the telescopic sealing structure in Step 7) can also be replaced by a rectangular annular seal formed by moving a cargo body of another waste transport vehicle below the outlet of the telescopic sealing structure.

As an improvement of the foregoing embodiment, the loading method for household waste further includes extracting gas in the rectangular annular sealed space for combustion and deodorization. During loading, a negative pressure is formed in the rectangular annular sealed space to prevent foul odor from leakage.

The loading system for household waste for implementing the loading method for household waste includes the waste loading hopper 2 for guiding waste into the cargo body of the waste transport vehicle, the telescopic sealing structure 5 arranged outside the waste loading hopper for forming the rectangular annular seal between the cargo body opening and the outlet of the waste loading hopper, and the cover picking and placing device 11 for picking and placing the cargo body cover of the waste transport vehicle.

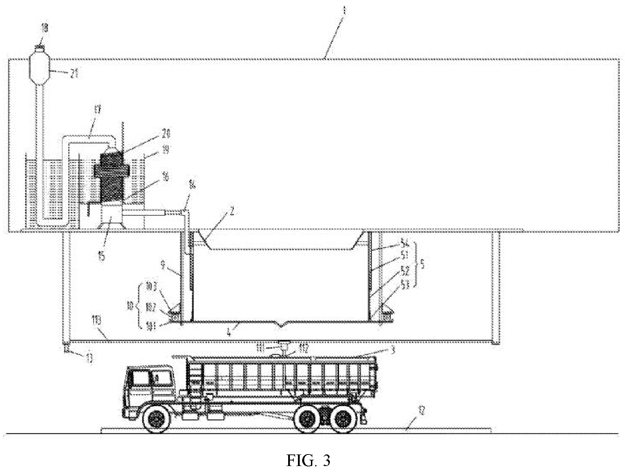

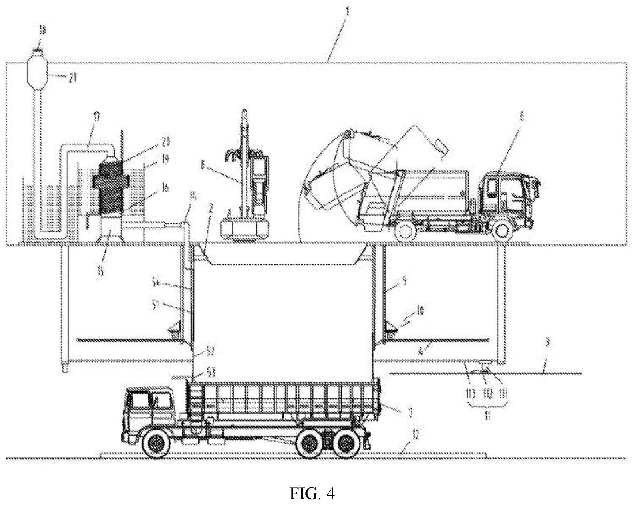

In this embodiment, the telescopic sealing structure 5 includes a fixed sealing sleeve 51 arranged outside the waste loading hopper, a movable sealing sleeve 52 in sliding fit with the fixed sealing sleeve up and down, and first linear motion drivers 54 for driving the movable sealing sleeve to move up and down. The first linear motion driver can be an air cylinder or a hydraulic cylinder. In this embodiment, the first linear motion driver is vertically arranged, and a lower end of the first linear motion driver is fixedly arranged, specifically, is fixed on a building foundation 55. An outer side of the movable sealing sleeve is provided with jacking blocks 56 respectively cooperating with upper ends of the first linear motion drivers. When the first linear drivers are extended, the first linear drivers push the movable sealing sleeve 52 to move upward. When the first linear motion drivers are shortened, the movable sealing sleeve 52 moves downward. In the specific implementation, when the movable sealing sleeve 52 moves downward until a lower end of the movable sealing sleeve is connected with the cargo body opening, the rectangular annular seal is formed. Moreover, when the lower end of the movable sealing sleeve is connected with the cargo body opening, the upper end of the first linear motion driver descends to form an interval distance with the jacking block 56. When the waste is loaded into the cargo body, the pressure borne by the wheel of the transport vehicle increases with the increase of the waste in the cargo body. The compressed deformation of the wheel may gradually move the cargo body opening downward. At this time, because there is the interval distance between the upper end of the first linear motion driver 54 and the jacking block 56, the movable sealing sleeve 52 can follow the cargo body opening downward under the gravity of the movable sealing sleeve, thereby ensuring that the lower end of the movable sealing sleeve 52 remains connected with the cargo body opening. In this way, the rectangular annular sealing structure may not be damaged due to the descent of the cargo body opening. Of course, in different embodiments, the first linear motion drivers 54 can also be arranged as shown in FIG. 3 and FIG. 4.

As an improvement of the foregoing embodiment, the telescopic sealing structure 5 further includes a rubber sealing skirt 53 arranged at a lower end of the movable sealing sleeve. During loading, the rubber sealing skirt 53 surrounds the cargo body opening, thereby improving the sealing effect.

As an improvement of the foregoing embodiment, the loading system for household waste further includes a suspension frame 9 fixedly arranged outside the telescopic sealing structure, two sealing plates 4 arranged on the suspension frame for sealing a lower port of the telescopic sealing structure, and driving devices 10 for driving the two sealing plates to perform opening and closing movements. In this embodiment, the driving device 10 includes a rack 101 arranged on the sealing plate, a gear 102 matched with the rack, and a motor 103 arranged on the suspension frame to drive the gear to rotate. When there is no household waste in the waste loading hopper, the driving device 10 drives the two sealing plates to be closed to seal an outlet of the waste loading hopper, thereby preventing foul odor in the waste loading hopper and the transfer workshop from leakage and polluting air, and also preventing residual sewage in the waste loading hopper from leakage and polluting the surrounding environment.

As an improvement of the foregoing embodiment, the suspension frame 9 is a rectangular sealing pipe. The suspension frame 9 is of a structure of a rectangular sealing pipe. A second layer of annular seal is formed outside the telescopic sealing structure 5, thereby better preventing foul odor from leakage.

In this embodiment, the cover picking and placing device 11 includes a hydraulic cylinder 111 with a vertically downward telescopic rod, a horizontal fork plate 112 connected with a piston rod of a hydraulic cylinder, and second linear motion drivers 113 for driving the hydraulic cylinder to translate. The second linear motion driver can adopt a linear motor. In the specific implementation, in order to prevent the linear motor from interfering with the downward extension of the telescopic sealing structure, the linear motor needs to be arranged on an outer side of the telescopic sealing structure. A cross plate is connected with sliders of the two linear motion drivers. The hydraulic cylinder 111 is arranged on the cross plate. In this way, the linear motor can drive the cross plate and the hydraulic cylinder on the cross plate to translate, such that the horizontal fork plate can be inserted or withdrawn from the socket arranged on the top of the cargo body cover, and the cargo body cover can be picked and placed. Of course, in different embodiments, the second linear motion driver 113 can also be an existing linear motion driver such as a traveling crane and a linear sliding table. Moreover, the horizontal fork plate 112 can also be replaced by a movable connecting member in the form of a hook. Of course, in different embodiments, the cover picking and placing device 11 can also be of other forms.

As an improvement of the foregoing embodiment, the loading system for household waste further includes a parking positioning device of the waste transport vehicle. In this embodiment, the parking positioning device includes guiding limit rails 12 for guiding the waste transport vehicle to drive under the waste loading hopper. The guiding limit rails 12 limit the position of the waste transport vehicle in the width direction of the cargo body. The vehicle of the waste transport vehicle travels between the guide limit rails 12, such that the driving direction of the waste transport vehicle is limited, and the center of the width of the cargo body of the waste transport vehicle can be opposite to the center of the width of the waste loading hopper. Further, the parking positioning device further includes a parking distance positioning plate 13 for cooperating with the ranging radar arranged in the front of the waste transport vehicle. As the waste transport vehicle moves forward, the ranging radar measures the distance from the parking distance positioning plate 13 in real time. When the measured distance reaches a set threshold, a ranging radar alarm sends an alarm voice to a driver to remind the driver to stop. This can ensure that when the waste transport vehicle stops, the length center of the cargo body is opposite to the length center of the waste loading hopper. In this way, when the vehicle is loaded, it can ensure that household waste can enter the cargo body accurately. Of course, in different embodiments, the parking positioning device can also be of other forms. For example, a stop sign line can be set below the waste loading hopper, and a 360-degree panoramic image can be set on the waste transport vehicle, such that the driver can observe the stop sign line through the panoramic image, thereby achieving accurate parking.

As an improvement of the foregoing embodiment, the loading system for household waste further includes a combustion deodorizing device, the combustion deodorizing device includes a gas drainage pipe 14 communicating with an inner space of the fixed sealing sleeve, a combustion furnace 15 connected with the gas drainage pipe, a vertical combustion chamber 16 connected with the combustion furnace, an exhaust pipe 17 connected with an exhaust port of the vertical combustion chamber, an exhaust fan 18 arranged at a tail end of the exhaust pipe, and a cooling device arranged outside the vertical combustion chamber and the exhaust pipe. In this embodiment, the cooling device includes a cooling water tank 19 arranged outside the vertical combustion chamber and the exhaust pipe and a cooling water pipe 20 wrapped outside the vertical combustion chamber. The operating principle of the combustion deodorizing device is as follows.

The exhaust fan 18 operates to introduce waste foul odor inside the telescopic sealing structure and near the inlet and outlet of the telescopic sealing structure into the combustion furnace. The combustion furnace ignites to generate a high-temperature flame, such that toxic and harmful substances in the waste foul odor are carbonized and decomposed in the combustion furnace and the vertical combustion chamber. Especially in the vertical combustion chamber, the high temperature generated by the external flame of the combustion furnace fully carbonizes and decomposes foul odor in airflow, thereby achieving the purposes of disinfection and deodorization. A negative pressure generated by the operation of the exhaust fan 18 can introduce waste foul odor near the outlet of the telescopic sealing structure into the combustion furnace, such that foul odor can be prevented from spreading outward to pollute air even when the sealing ring of the telescopic sealing structure is not in full contact with the cargo body opening.

In this embodiment, the combustion deodorizing device is provided with a cooling device, thereby reducing the temperature of the outer wall of the vertical combustion chamber, and prolonging the service life of the vertical combustion chamber. By cooling the exhaust pipe, the temperature of exhaust flue gas can be reduced, thereby helping protect the exhaust fan. In the specific implementation, multiple air inlet holes 21 can be arranged at the outlet section of the exhaust pipe 17. Some cold air can be introduced through the air inlet holes to further reduce the exhaust temperature, thereby better protecting the exhaust fan. At the same time, in the specific implementation, a diameter-enlarged section can be arranged on the vertical combustion chamber. When waste foul odor left in the telescopic sealing structure contains more flammable gas, waste foul odor may explode after being introduced into the combustion furnace. The diameter-enlarged section is arranged on the vertical combustion chamber, thereby effectively buffering a shock wave generated by explosion, and having an explosion-proof effect. Moreover, the negative-pressure airflow generated by the exhaust fan 18 can prevent the foul odor from incinerating or exploding at the stage of the gas drainage pipe 14. The negative-pressure airflow generated by the exhaust fan 18 can allow a large amount of fresh air to enter the telescopic sealing structure to inhibit the environment of foul odor regeneration.

Finally, it should be noted that the foregoing embodiments are only used to illustrate the technical solution of the present invention, rather than limit the technical solution. Although the present invention has been described in detail with reference to the preferred embodiments, it should be understood by those skilled in the art that the technical solution of the present invention can be modified or replaced by equivalents without departing from the purpose and scope of the technical solution, which should be included in the scope of the claims of the present invention.

## Claims

1. A loading method for household waste, comprising following steps:
1) driving a waste transport vehicle to a position under a waste loading hopper of a waste transfer workshop;
2) removing a cargo body cover of a cargo body when the cargo body of the waste transport vehicle is in a horizontal state to completely open a cargo body opening of the waste transport vehicle;
3) controlling the telescopic sealing structure to extend downward to the cargo body opening of the waste transport vehicle, to form a rectangular annular seal between the cargo body opening of the waste transport vehicle and the waste loading hopper; wherein the telescopic sealing structure is arranged outside the waste loading hopper;
4) dumping the waste into the waste loading hopper by a front-end household waste collection vehicle entering the transfer workshop, and falling down the household waste from the waste loading hopper into the cargo body of the waste transport vehicle;
5) controlling the telescopic sealing structure on an outer side of the waste loading hopper to retract upward and reset; and
6) covering the cargo body cover of the waste transport vehicle.

2. The loading method for household waste according to claim 1, further comprising closing an outlet at a lower end of the telescopic sealing structure with sealing plates after step 6), or moving a cargo body of another waste transport vehicle below the outlet of the telescopic sealing structure after step 6) to form the rectangular annular seal.

3. The loading method for household waste according to claim 1, further comprising extracting gas in the rectangular annular sealed space for deodorization.

4. A loading system for household waste of the loading method for household waste according to claim 1, comprising the waste loading hopper for guiding waste into the cargo body of the waste transport vehicle, the telescopic sealing structure arranged outside the waste loading hopper for forming the rectangular annular seal between the cargo body opening and the outlet of the waste loading hopper, and a cover picking and placing device for picking and placing the cargo body cover of the waste transport vehicle.

5. The loading system for household waste according to claim 4, further comprising a suspension frame fixedly arranged outside the telescopic sealing structure, the two sealing plates arranged on the suspension frame for sealing a lower port of the telescopic sealing structure, and driving devices for driving the two sealing plates to perform opening and closing movements.

6. The loading system for household waste according to claim 5, wherein each of the driving devices comprises a rack arranged on each of the sealing plates, a gear cooperating with the rack, and a motor arranged on the suspension frame to drive the gear to rotate.

7. The loading system for household waste according to claim 4, wherein the telescopic sealing structure comprises a fixed sealing sleeve arranged outside the waste loading hopper, a movable sealing sleeve in sliding fit with the fixed sealing sleeve up and down, and first linear motion drivers for driving the movable sealing sleeve to move up and down.

8. The loading system for household waste according to claim 4, wherein the first linear motion drivers are vertically arranged, a lower end of each of the first linear motion drivers is fixedly arranged, and the movable sealing sleeve is provided with jacking blocks cooperating with an upper end of a corresponding one of the first linear motion drivers.

9. The loading system for household waste according to claim 4, wherein the telescopic sealing structure further comprises a rubber sealing skirt arranged at a lower end of the movable sealing sleeve.

10. The loading system for household waste according to claim 5, wherein the suspension frame is a rectangular sealing pipe.

11. The loading system for household waste according to claim 4, wherein the cover picking and placing device comprises a hydraulic cylinder with a vertically downward telescopic rod, a horizontal fork plate or a movable connecting member connected with a piston rod of a hydraulic cylinder, and second linear motion drivers for driving the hydraulic cylinder to translate.

12. The loading system for household waste according to claim 4, further comprising a parking positioning device of the waste transport vehicle.

13. The loading system for household waste according to claim 12, wherein the parking positioning device comprises guiding limit rails for guiding the waste transport vehicle to travel under the waste loading hopper and a parking distance positioning plate for cooperating with the ranging radar arranged in a front of the waste transport vehicle.

14. The loading system for household waste according to claim 7, further comprising a combustion deodorizing device, wherein the combustion deodorizing device comprises a gas drainage pipe communicating with an inner space of the fixed sealing sleeve, a combustion furnace connected with the gas drainage pipe, a vertical combustion chamber connected with the combustion furnace, an exhaust pipe connected with an exhaust port of the vertical combustion chamber, an exhaust fan arranged at a tail end of the exhaust pipe, and a cooling device arranged outside the vertical combustion chamber and the exhaust pipe.

15. The loading system for household waste according to claim 14, wherein the cooling device comprises a cooling water tank arranged outside the vertical combustion chamber and the exhaust pipe and a cooling water pipe wrapped outside the vertical combustion chamber.
